# EUROPEAN PATENT APPLICATION

(11) **EP 0 698 971 A2**
(43) Date of publication of application: **28.02.1996**
(21) Application number: 95109343.4
(22) Date of filing: 16.06.1995
(51) Int. Cl.: H04B 1/707

(54) **Synchronization for DSSS transmission system using jittered pilot code**

(30) Priority: 28.07.1994 GB 9415191
(71) Applicant: ROKE MANOR RESEARCH LIMITED, Romsey, Hampshire, SO51 0ZN (GB)
(72) Inventor: Hulbert, Anthony Peter, Southampton, SO1 5AN (GB)
(74) Representative: Allen, Derek

(57) **Abstract**

The invention relates to pilot assisted direct sequence spread spectrum links. Fine code synchronisation generally requires either multiple receiver correlators (early/prompt/late) or jittered receiver correlators (Tau dither). The present invention removes the need for either by jittering the pilot code at source so that the receiver only needs to examine a single code phase and can generate a fine code phase steering signal from the difference between the pilot energy measured when transmitted early and measured when transmitted late.

## Description

The present invention relates to synchronisation apparatus and primarily to the downlink (base station to mobile unit direction) of either a cellular mobile radio system or a so-called "last mile" radio access network for fixed connection telephony.

The radio access method is Code Division Multiple Access (CDMA) using Direct Sequence Spread Spectrum (DSSS). For convenience, the term "mobile" is used throughout to apply to the receiving end, though this can also refer to the equipment at a customer's premises for the radio access network.

It is assumed that many signals are transmitted from the base station on a single carrier and that a common spread spectrum pilot signal is also transmitted to provide phase information, allowing coherent demodulation in the mobile receivers. Such a pilot also provides amplitude information for the different signal components received over the various radio paths, allowing efficient combining in a so-called "Rake" receiver.

DSSS radio links include a transmitter in which the data signal is spread by a spreading code, and a receiver in which the signal is despread by the same spreading code. Correct operation of the despreader requires synchronisation of the code in the receiver with that generated in the transmitter, shifted appropriately by any delays in the signal path. In the case of a pilot assisted radio link, synchronisation of the pilot and signal code are required. However, because of the fixed relationship between the pilot code and the signal code and because the pilot transmission is generally stronger than any individual signal transmission, synchronisation is generally performed on the pilot alone.

Initial coarse synchronisation is generally obtained either by examining many pilot code phases simultaneously with parallel hardware or by stepping a single receiver code phase until a correlation peak is found. Where minimum complexity is important, the latter approach is most frequently used. Once the approximate code phase has been found it is desirable to provide means to achieve fine synchronisation wherein the correlation for every bit is obtained at the peak value. The correlation shape is determined by the convolution of the transmitter filter shape with the receiver filter shape. For a frequency channelised system, as is generally necessary for the applications cited, relatively sharp filtering will be applied and the correlation function will be a smoothly peaking function.

A conventional approach uses three correlators, an early, a late and a prompt correlator. Moreover the signal must be sampled frequently enough to allow the different correlators to take the different timings simultaneously.

Alternatively, the Tau dither loop could be used, but this has some disadvantages, a dithering circuit is required in every receiver, and the signal code is never held on the prompt position but jitters about it.

The present invention has the following advantages: sampling once per chip only is required, and the timing of the sampling clock can be altered to achieve the fine control of the code timing.

Only one pilot correlator and one signal correlator is needed.

The average of the pilot code position is correct (prompt) and the signal code position is prompt so no additional loss arises from the jittering.

An object of the invention is to provide a method of permitting accurate fine synchronisation of the timing of the code phase (to a fraction of a chip) with very low complexity in the mobile receiver.

Some of the complexity which would normally reside in the receiver is effectively transferred to the transmitter. However this additional complexity applies only to the pilot generator in the transmitter.

According to the present invention there is provided synchronisation apparatus for use in code division multiple access systems employing direct sequence spread spectrum, including means for jittering the timing of a pilot signal code symmetrically about the timing of a signal code, means for measuring pilot energy whilst the code is early and late, and means for generating a steering signal based upon the difference between the measured energies which is used to control the timing of the code phase to obtain a peak response.

Various embodiments of the present invention will now be described with reference to the accompanying drawings wherein;
Figure 1 shows a block diagram of a pilot jitter circuit,
Figure 2 shows a block diagram of a basic receiver clock correction circuit,
Figure 3 shows a block diagram of a clock correction circuit for analogue phase modulation,
Figure 4 shows a block diagram of a phase lock loop two finger Rake receiver with a clock correction circuit, and
Figure 5 shows a block diagram of a feed forward two finger Rake receiver with a clock correction circuit.

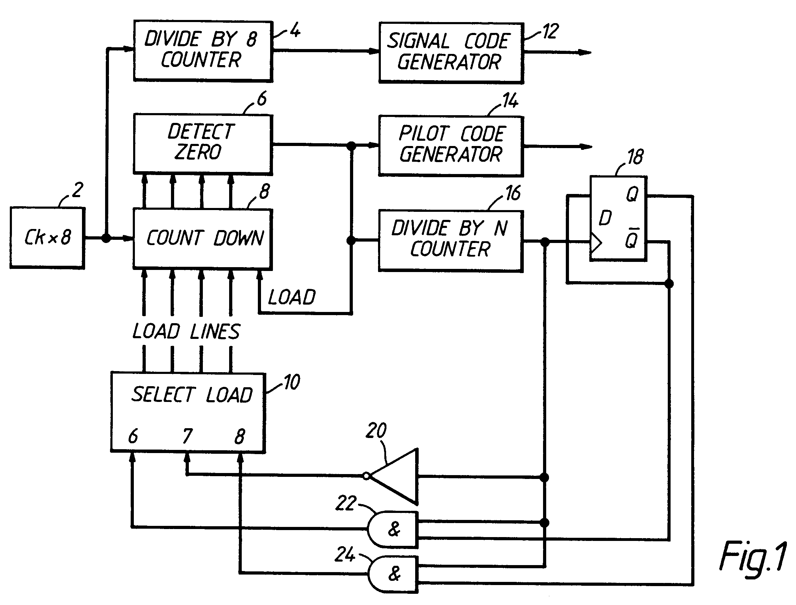

Referring to Figure 1, the implementation of a pilot jitter circuit will now be described. The jitter circuit comprises a clock generator 2 arranged to generate eight clock signals which are connected to a divide by eight counter 4 and to an input of a countdown counter 8. An output of the divide by eight counter 4 is connected to an input of a signal code generator 12. The outputs of the countdown counter 8 are connected to a zero detection circuit 6, the output of which is connected to a pilot code generator 14, to an input of a divide by N counter 16 and to an input of the countdown counter 8. The divide by N counter 16 is connected to a D-type flip flop 18 the outputs of which are connected to a respective input of an AND-gate 22, 24. The output of the divide by N counter 16 is also connected to an input of an inverter 20. An output of the inverter 20, and an output of the AND-gates 22, 24 are connected to an input of a select load circuit 10, respectively. The select load circuit 10 has four output lines each of which is connected to a respective input of the countdown counter 8. The output of the divide by N counter 16 is also connected to a further input of the AND-gates 22, 24.

The operation of the clock jitter circuit will now be described. The phase of the pilot code is jittered one eighth of a chip early after N chips then one eighth of a chip late after another N chips, and the cycle repeats itself. The countdown counter 8, the zero detection circuit 6 and the load selection circuit 10 comprises a divide by x, y or z counter, where x is seven, y is eight and z is nine. Normally the counter divides by eight producing a clock at chip rate from the clock unit 2. However, when the divide by N counter 16 completes its cycle it produces a pulse, one chip wide during which the load is not seven but either six or eight depending upon the state of the D-type flip flop 18 which toggles between high and low signal levels. When the counter loads six, the pilot code phase is advanced by one eighth of a chip and when it loads eight the pilot code phase is retarded by one eighth of a chip. The signal code phase is generated by a separate divider and is not jittered.

It should be noted that although a simple switching between early and late pilot code phase is described any approach which involves some controlled variation of the pilot code phase falls within the scope of the present invention.

Whilst the variation of code phase will increase the transmitted bandwidth for the pilot slightly, this is not considered a problem because the pilot energy represents only a small proportion of the transmitted power for a fully loaded cell. If the cell is not fully loaded then the absolute power is reduced. Also, the transmit pulse shaping filter will contain the spectrum.

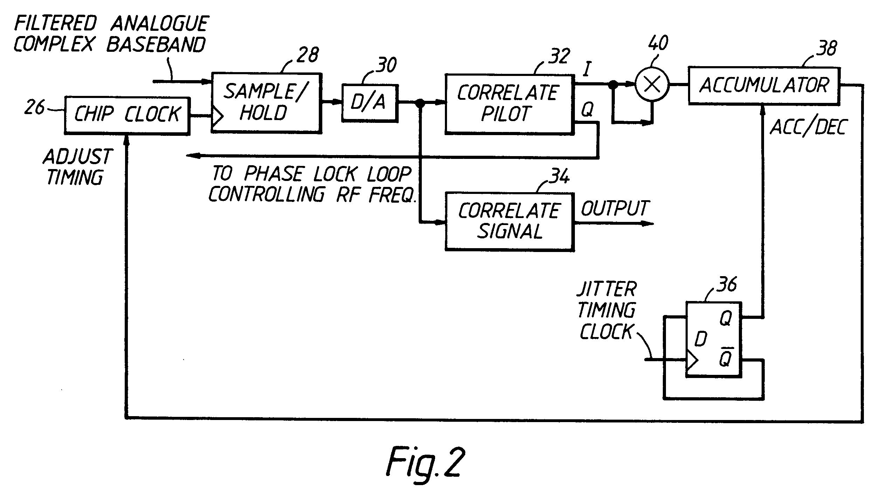

Referring to Figure 2, a block diagram is shown of a basic receiver clock correction circuit. It comprises a clock generation circuit 26 for generating a chip clock which drives a sample and hold circuit 28. The sample and hold circuit 28 also receives a complex baseband signal which is in analogue form and has been filtered. The output of the sample and hold circuit 28 is connected to the input of a digital to analogue converter 30, the output of which is connected to an input of a correlate pilot circuit 32 and to a correlate signal circuit 34 which generates an output signal. The correlate pilot circuit 32 generates an inphase and a quadrature phase output signal. The quadrature phase output signal is applied to a phase lock loop for controlling the RF frequency. The inphase signal is squared by a multiplier 40, the output of which is applied to an accumulator 38. The output of the accumulator 38 is used to adjust the timing of the clock generation circuit 26. The accumulator 38 is controlled by a D-type flip-flop 36 which is driven from a jitter timing clock.

The circuit as shown in Figure 2 allows operation with sampling at only one sample per chip (provided all necessary filtering can be performed in analogue circuitry). The signal is sampled and digitised according to the chip clock generated by circuit 26. The correlator 32 produces complex outputs of the correlation with the pilot. The quadrature channel feeds back to the phase lock loop which tends to adjust the Q output to zero. Thus all the pilot amplitude appears on the inphase channel. Squaring by the multiplier 40 yields an estimate of the pilot's energy. This is fed to the accumulator 38 which alternately adds and subtracts the estimate from the previous running total. The control of the timing is such that addition is performed when the pilot code is transmitted early and subtraction is performed when the pilot code is transmitted late. Synchronisation of these functions is straightforward because the timing of the switching between late and early code phase will be given a fixed relationship to the spreading code sequence itself.

Thus the accumulator 38 serves not only as a differencing circuit but also as an integrator which serves as a loop filter for the timing control loop. The output of the accumulator 38 feeds back to adjust the timing of the clock generation circuit 26 in such a sense as to tend to minimise the mean difference between the energy between the early pilot code transmissions and the late pilot code transmissions.

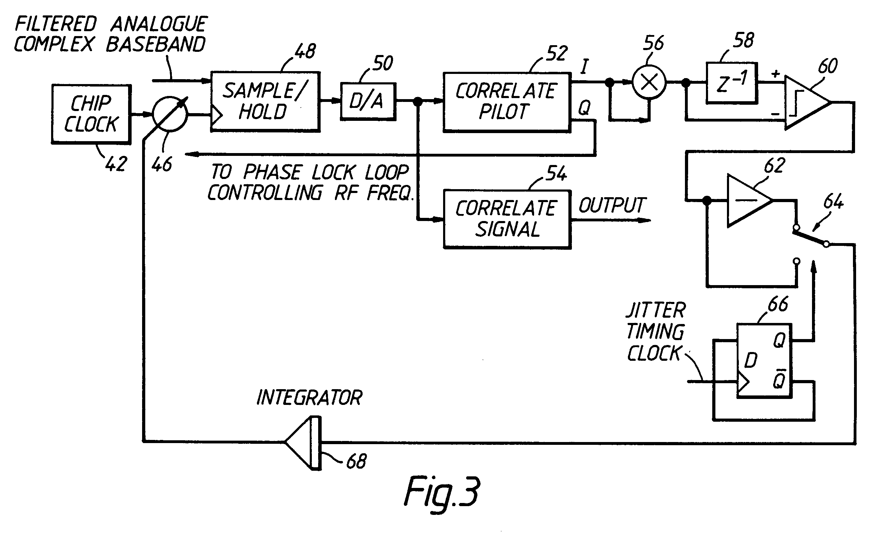

The circuit as just described is well suited to the case where the adjustment of the receiver code phase is performed in a digital fashion. In some applications, (eg for very large spread band-widths in which a primary clock several times faster than the chip rate is undesirable or impractical), it may be preferable to implement the clock chip adjustment in an analogue fashion. For example, an analogue type phase modulator such as a pulse width modulator might be used. In this case an analogue phase modulator together with a digital analogue converter might be assumed to be included within the clock generation circuit. The additional circuitry of a digital analogue converter might be considered to be undesirable. Figure 3 illustrates an alternative approach which allows control of an analogue phase modulator whilst removing the need for an explicit digital to analogue converter.

Referring to Figure 3, the clock generation circuit 42 is connected to a sample and hold circuit 48 by way of an analogue phase modulator 46. The sample and hold circuit 48 also receives a filtered analogue complex baseband signal. The output of the sample and hold circuit 48 is connected to an input of a digital to analogue converter 50, the output of which is connected to the input of a correlate pilot circuit 52 and to a correlate signal circuit 54. The output of the correlator signal circuit 54 represents the output signal. The correlate pilot circuit generates an inphase and quadrature phase output signal. The quadrature phase output signal is used to control an RF frequency by way of a phase lock loop. The I output is connected to a multiplier 56 which is arranged to square the I output. The output of the multiplier 56 is applied to the input of a delay line 58 and also to the input of a hard limiting device 60. The output of the delay line 58 is connected to a further input of the hard limiting device 60. The output of the hard limiting device 60 is connected to an input of a subtractor 62 and to a first terminal of a switch 64. The output of the subtractor 62 is connected to a second terminal of the switch 64. A third terminal of the switch 64 is connected to an integrator 68, the output of which is used to drive the analogue phase modulator 46 connected between the clock generation circuit 42 and the sample and hold circuit 48. The switch 64 is controlled by a D-type flip-flop 66 which is driven by a jitter timing clock signal.

The circuit as described above forms the sign of the difference between the energies of adjacent early/late measurements. Depending on which came first, the sign may need to be inverted, and this is carried out by the subtractor 62 and the switch 64 under control of the jitter timing clock. The output of the switch is a binary signal which is applied to an analogue integrator 68 which serves as a loop filter. This filtering generates the analogue control signal and is applied to the analogue phase modulator 46. A small, but often acceptable, degradation in performance results from the limiting.

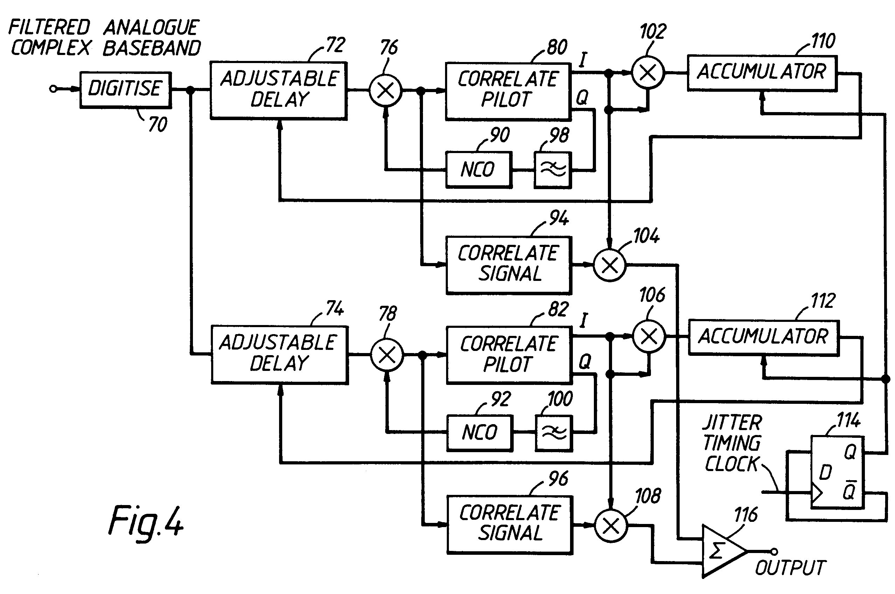

The circuits described above are suitable for a basic spread spectrum receiver. In the case of a Rake receiver, oversampling of the signal will be required since different fine chip phases are likely to be needed for the different Rake fingers. In the case of a receiver using phase lock loop Rake fingers the architecture would be typically as shown in Figure 4.

Referring to Figure 4, a filtered analogue complex baseband signal is received at a digitise circuit 70. The output of the digitise circuit 70 is connected to the input of two adjustable delay circuits 72 and 74 respectively. The output of the delay circuit 72 is connected to an input of a multiplying circuit 76, the output of which is connected to an input of a correlate pilot circuit 18 and to a correlate signal circuit 94. The inphase output of the correlate pilot circuit is connected to first and second inputs of a multiplying circuit 102. The quadrature phase output of the correlate pilot circuit 80 is connected to an input of a filter 98, the output of which is connected to a numerically controlled oscillator 90. An output from the oscillator 90 is connected to a further input of the multiplying circuit 76. The inphase output of the correlate pilot circuit is also connected to an input of a multiplying circuit 104, which at a further input thereof, receives an output from the correlate signal circuit 94. The output of the multiplying circuit 102 is connected to an input of an accumulator 110, the output of which is fed back to control the adjustable delay circuit 72. The output of the multiplying circuit 104 is connected to a first input of a summator 116, the output of which generates the data output signal. The adjustable delay circuit 74 has an output connected to an input of a multiplying circuit 78, the output of which is connected to a correlate pilot circuit 82 and to a correlate signal circuit 96. The inphase output from the correlate pilot circuit 82 is connected to first and second inputs of a multiplying circuit 106 and to a further input of a multiplying circuit 108. The output of the correlator signal circuit 96 is connected to a further input of the multiplying circuit 108, the output of which is connected to a further input of the summator 116. The quadrature output signal from the correlate pilot circuit 82 is connected to a filter 100, the output of which is connected to a numerically controlled oscillator 92, the output of which is applied to a further input of the multiplying circuit 78. The output of the multiplying circuit 106 is connected to the input of an accumulator 112, the output of which is fed back to the adjustable delay circuit 74. A D-type flip-flop 114 is used to control the accumulators 110 and 112 and receives a jittered timing clock signal.

The circuit described above is similar to Figure 2 except that the digitized signal must be oversampled so the adjustable delay circuits 72, 74 are essential to the operation performed by selecting the best of the available samples from the oversampled range (eg the best of eight for an eight sample per chip register). The adjustable delay circuits 72, 74 will also have been set more closely by other means to select the two strongest multipath components. The phase lock loop is now implemented fully digitally with complex numerically controlled oscillators 90, 92 and the mixer in the loop formed by the multiplying circuits 76, 78 are fully complex. The fine clock phases on the two Rake fingers are controlled independently and the outputs of the Rake fingers which appear on the inphase at the output of the correlator signal circuit 94, 96 are weighted in amplitude according to the level of the I phase at the output of the pilot correlator 80, 82 respectively. The weighted outputs are then added together to generate the overall decision variable which may either be limited to produce the demodulated BPSK or quantisized to provide soft decisions if the modulation was originally forward error correction encoded.

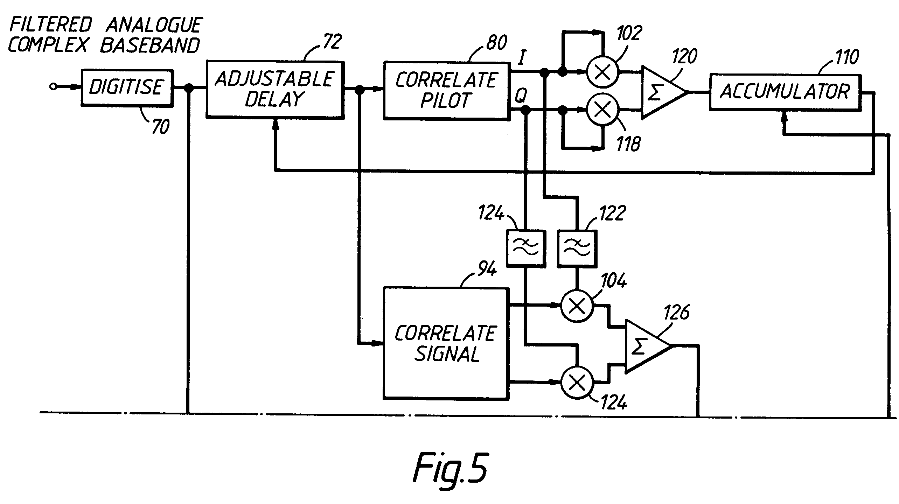

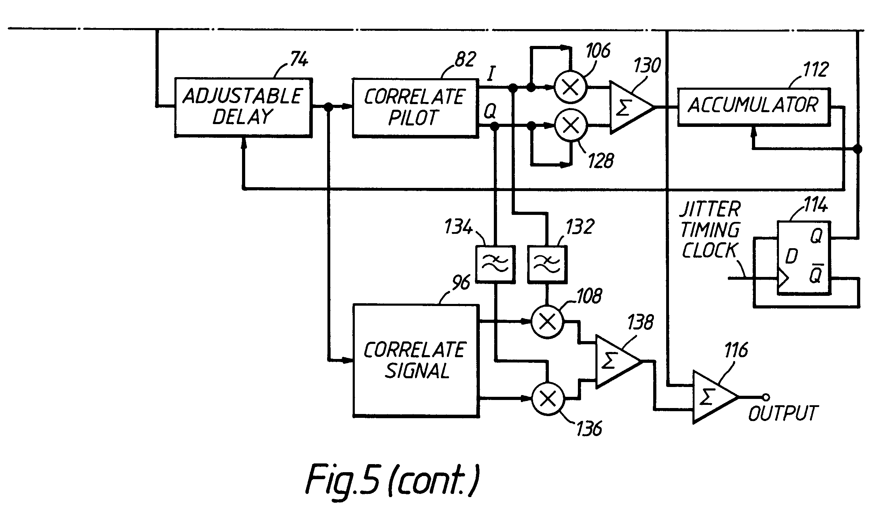

If a feed forward receiver is implemented then the architecture of Figure 5 applies.

Figure 5 is similar to Figure 4 and like circuit elements have been given like reference numerals. The differences are as follows:-
A quadrature phase output from the correlate pilot circuit 80 is connected to both inputs of a further multiplying circuit 118 and the output of the multiplying circuits 102, 118 are applied to a summator 120 before being presented to the accumulator 110. The inphase and quadrature phase outputs from the correlate pilot circuit 80 are respectively applied to a filter 122, 124 the outputs of which are applied to an input of a respective multiplying circuit 104 and 124. The multiplying circuits 104, 124 receive at a further input thereof, a respective output signal from the correlate signal circuit 94. The outputs from the multiplying circuits 104, 124 are applied to a summator 126, the output of which is applied to an input of the summator 116.

Similarly the inphase and quadrature phase outputs from the correlate pilot circuit 82 are applied to both inputs of the multiplying circuit 106 and to both inputs of the multiplying circuit 128 respectively. The outputs of the multiplying circuits 106, 128 are applied to a respective input of a summator 130 before being applied to the accumulator 112. The inphase and quadrature phase outputs from the correlate pilot circuit 82 are respectively applied to a filter circuit 132, 134, the outputs of which are applied to a first input of a multiplying circuit 108 and to a first input of a multiplying circuit 136 respectively. The multiplying circuits 108, 136 at a further input thereof receive the output from the correlate signal circuit 96. The outputs from the multiplying circuits 108, 136 are applied to a respective input of a summator 138, the output of which is applied to a further input of the summator 116.

With reference to Figure 5 the I and Q components of the pilot measurements (improved by means of the estimating filters) on each Rake finger are used to phase align and amplitude weight the signals prior to combining. There is no phase lock loop to reduce the power on the Q output to zero, and therefore the powers on the I and Q outputs must be computed and added.

## Claims

1. Synchronisation apparatus for use in code division multiple access systems employing direct sequence spread spectrum, including means for jittering the timing of a pilot signal code symmetrically about the timing of a signal code, means for measuring pilot energy whilst the code is early and late, and means for generating a steering signal based upon the difference between the measured energies which is used to control the timing of the code phase to obtain a peak response.

2. Synchronisation apparatus as claimed in claim 1, wherein the means for measuring pilot energy comprises a countdown counter, a zero detection circuit, and a load selection circuit.

3. Synchronisation apparatus as claimed in claim 2, wherein the load selection circuit loads a value of six, seven or eight, when a value of six is loaded the pilot code phase is advanced one eighth of a chip, when a value of eight is loaded, the pilot code phase is retarded by one eighth of a chip.

4. Synchronisation apparatus as claimed in claim 3, wherein the load selection circuit is controlled by a divide by N counter and a D-type flip-flop.

5. Synchronisation apparatus as claimed in claim 1, wherein the means for measuring the pilot energy comprises a multiplier which squares the inphase output from a correlate pilot circuit, and an accumulator for receiving an output signal from the multiplier and arranged to alternately add and subtract the signal from a running total.

6. Synchronisation apparatus as claimed in claim 5 wherein the addition and subtraction is controlled by a D-type flip-flop which receives a jittered timing signal.

7. Synchronisation apparatus as claimed in claim 5 or claim 6, wherein the output of the accumulator is connected to a chip clock circuit for controlling said clock circuit, said clock circuit is connected to a sample and hold circuit which receives the filtered analogue baseband signal which is sampled prior to being applied via conversion means to the correlate pilot circuit.

8. Synchronisation apparatus as claimed in claim 7, wherein an analogue phase modulater is connected between said clock circuit and said sample and hold circuit, and said accumulator is replaced by a delay device connected to the output of the multiplier, and a hard limiting device connected at a first input to the output of the delay device, and at a second input to the output of the multiplier, an output of the hard limiting device being connected to a subtractor arranged to be switched in circuit or shortcircuited, for controlling the analogue phase modulator.

9. Synchronisation apparatus as claimed in claim 8, wherein the switch is controlled by a D-type flip-flop which receives a jitter timing signal, and the output of the subtractor is fed in the analogue phase modulator by way of an integrator.

10. Synchronisation apparatus wherein, in a Rake receiver, each Rake finger comprises the apparatus as claimed in claim 5 or claim 6, and the output of the accumulator is connected to and arranged to control an adjustable delay circuit, said adjustable delay circuit having an input for receiving the baseband signal and an output connected to a further multiplier, the output of which is connected to an input of a correlate pilot circuit and to an input of a correlate signal circuit, said further multiplier being controlled by a phase lock loop comprising a filter connected to a quadrature phase output of the correlate pilot circuit, and a numerically controlled oscillator connected to an output of the filter and to a further output of said further multiplier.

11. Synchronisation apparatus, wherein in a feed forward Rake receiver, each Rake finger includes the apparatus as claimed in claim 5 or claim 6, including correlator pilot circuit and a correlate signal circuit, the inphase and quadrature phase outputs from the correlate pilot circuit being respectively squared by multiplying means and summed by a summator, the output of which is connected to the accumulator, an output of said accumulator is fed to and controls an adjustable delay device, having an input arranged to receive the baseband signal, and an output connected to an input of the correlate pilot circuit and to an input of the correlate signal circuit.

12. Synchronisation apparatus as claimed in claim 11, wherein the inphase and quadrature phase outputs from the correlate pilot circuit are filtered by filtering means and multiplied with a respective output from the correlate signal circuit by multiplying means, the output signals from said multiplying means being added by summator means and providing a signal output for the Rake finger.
